# EUROPÄISCHE PATENTSCHRIFT

(11) **EP 0 932 966 B1**
(45) Veröffentlichungstag und Bekanntmachung des Hinweises auf die Patenterteilung: **18.08.2004**
(21) Anmeldenummer: 97945772.8
(22) Anmeldetag: 14.10.1997
(51) Int. Cl.: H04L 29/06, G06F 17/30, G01C 21/20, G08G 1/127

(54) **VERFAHREN UND EINRICHTUNG ZUM DATENAUSTAUSCH ZWISCHEN EINER ZENTRALEN EINHEIT UND EINER DATENENDEINRICHTUNG**
METHOD AND DEVICE FOR DATA TRANSMISSION BETWEEN A CENTRAL UNIT AND A DATA TERMINAL EQUIPMENT
PROCEDE ET DISPOSITIF DE TRANSMISSION DE DONNEES ENTRE UNE UNITE CENTRALE ET UN EQUIPEMENT DE TRAITEMENT DE L'INFORMATION

(30) Priorität: 16.10.1996 DE 19644703
(43) Veröffentlichungstag der Anmeldung: 04.08.1999
(73) Patentinhaber: ATX Europe GmbH, 40547 Düsseldorf (DE)
(72) Erfinder: GILL, Thorsten, D-45326 Essen (DE); KOLB, Ralf, D-47877 Willich (DE); SCHULZ, Werner, D-40670 Meerbusch (DE); MEYER, Derk, D-40470 Düsseldorf (DE)
(74) Vertreter: Meissner, Peter E., Dipl.-Ing.
(86) Internationale Anmeldenummer: PCT/DE1997/002448
(87) Internationale Veröffentlichungsnummer: WO 1998/017040

(56) Entgegenhaltungen:
- WO-A-96/07110
- US-A- 5 465 401
- US-A- 5 543 789

## Beschreibung

Die Erfindung betrifft ein Verfahren und eine Einrichtung zum Datenaustausch zwischen einer für die Verarbeitung, Speicherung und Bereitstellung von Daten vorgesehenen zentralen Einheit und einer Datenendeinrichtung über einen Kommunikationskanal, wobei von der Datenendeinrichtung an die zentrale Einheit anwendungsbezogene Abfragen (Abfragefunktionalitäten) mit einer der jeweiligen Anwendung entsprechenden spezifischen Abfragestruktur gerichtet werden und die spezifischen Abfragestrukturen in der zentralen Einheit gespeichert sind und wobei die Antworten der zentralen Einheit mit einer der jeweiligen Anwendung entsprechenden spezifischen Antwortstruktur an die Datenendeinrichtung übermittelt werden.

Ein solcher Datenaustausch findet beispielsweise statt zwischen den Personalcomputern beliebiger Benutzer, die über einen als Datennetzwerk ausgebildeten Kommunikationskanal mit einem Datenbankrechner (z.B. Patentdatenbank) verbunden sind. Üblicherweise müssen die Anfragen der Benutzer zur gezielten Erlangung gewünschter Auskünfte aus der Datenbank in einer bestimmten, für den jeweiligen Datenbankrechner fest vorgegebenen Abfragesprache vom Benutzer formuliert werden. Aber nicht nur die Datenbankabfragen, sondern auch die gelieferten Antworten des Datenbankrechners werden dabei in fest vorgegebenen Strukturen übermittelt. Bei derartigen Anwendungen ist in der Regel die Datenendeinrichtung des Benutzers ortsfest angeordnet, wobei die Ortsposition der Datenendeinrichtung aber keinerlei Rolle spielt.

Anders ist letzteres jedoch beispielsweise in bestimmten Anwendungen auf dem Gebiet der Verkehrstelematik. So ist es etwa im Rahmen von Offboard-Navigationssystemen entscheidend, daß der von einem Benutzer aus einem Fahrzeug heraus angefragte Verkehrsrechner eine Information über den aktuellen Aufenthaltsort des Benutzers erhält, damit er z.B. eine geeignete Fahrtroutenempfehlung oder relevante Verkehrslageinformationen an die Datenendeinrichtung übermitteln kann. Insbesondere im Rahmen der Verkehrstelematik wird es künftig aber auch andere Anwendungen geben, die sich die bestehende Gerätetechnik der Verkehrstelematik zunutze machen wollen, aber nicht oder nur bedingt verkehrstechnische Belange berühren. Beispielsweise sind die in Fahrzeugen eingebauten oder von Personen mitgeführten Endgeräte der Offboard-Navigation, die ihre Informationen über einen drahtlosen Kommunikationskanal von einer zentralen Einheit beziehen, grundsätzlich geeignet, auch Anfragen etwa über Hotels in einem vorgegebenen Umkreis vom aktuellen Aufenthaltsort des Benutzers zu beantworten. Dazu muß aber die zentrale Einheit, die über die angefragten Informationen verfügt, den aktuellen Aufenthaltsort des Benutzers kennen, um die relevanten Informationen selektieren zu können. Eine andere neue Dienstleistung könnte beispielsweise in der Mitteilung über aktuell in der Nähe des Benutzers verfügbare Parkplätze oder auch in der Reservierung eines bestimmten anzufahrenden Parkplatzes bestehen. Es können aber auch beliebige andere Informationen (z.B. über Sehenswürdigkeiten, Museen, Restaurants) gegeben werden, die für den Benutzer von Interesse sein könnten (points of interest).

Im Grundsatz sind Endgeräte für die Offboard-Navigation für derartige Dienstleistungen geeignet und bedürfen ggf. lediglich entsprechender Modifikation. Um dem Benutzer den Zugang zu diesen Dienstleistungen so einfach wie möglich zu machen, muß das Endgerät beispielsweise eine Art Bildschirmmaske anbieten können, in die der Benutzer die wesentlichen Parameter zur Präzisierung seiner Frage eingeben kann, also bei der Anfrage nach Hotels etwa die Parameter "maximale Entfernung vom aktuellen Aufenthaltsort des Benutzers" und bei Bedarf "Hoteikategorie" und/oder "Vorhandensein bestimmter Einrichtungen" (z.B. Tennisplatz, Schwimmbad) und/oder "Anzahl benötigter Zimmer". Nicht nur diese Bildschirmmaske (Abfragestruktur) mit ihren Datenfeldbezeichnungen, sondern auch die Formatierung der Anzeige der von der angefragten zentralen Einheit übermittelten Antwort muß in der benutzten Datenendeinrichtung des Benutzers für die jeweils genutzte Dienstleistung (Abfragefunktionalität) gespeichert sein.

Heutzutage wird die Speicherung entsprechender Abfragestrukturen und Formatierungen der Ergebnisanzeigen in der Datenendeinrichtung üblicherweise softwaremäßig realisiert. Durch Laden eines neuen Programms in die Datenendeinrichtung kann der Umfang der benutzbaren Abfragefunktionalitäten erweitert werden, insbesondere auch erweitert werden um Dienste, die beim Verkauf der Datenendeinrichtung noch gar nicht bestanden haben. Trotz dieser gegebenen grundsätzlichen gerätetechnischen Flexibilität würde aber bei einer echten Massenanwendung mit vielen Tausend oder sogar hunderttausenden von Benutzern das Einspielen einer neuen Software für die Zugänglichmachung einer neuen Dienstleistung mit einem sehr großen Aufwand verbunden sein. Nach dem gegenwärtigen Stand der Technik würde beispielsweise der interessierte Benutzer sich jeweils der Mühe unterziehen, eine geeignete Fachwerkstatt aufzusuchen, um ein entsprechendes Update in seine Datenendeinrichtung einspielen zu lassen. Dieser Vorgang wird noch dadurch erschwert, daß im Regelfall jeweils herstellerabhängige unterschiedliche Software-Versionen eingespielt werden müssen.

Die US-A-4,543,789 offenbart ein Verfahren zum Datenaustausch zwischen einer Zentrale und einer Endeinrichtung mit einer anwendungsspezifischen Frage- und Antwortstruktur, wobei in der Zentrale und in der Endeinrichtung feste Formate für Fragen und Antworten gespeichert sind, in die die entsprechenden inhalte der Fragen und Antworten eingefügt werden.

Die US-A-5,465,401 offenbart ein Kommunikationssystem mit Mehrzweck-Endgeräten, bei welchem in unterschiedlicher Form, insbesondere akustisch und durch Tastendruck, Informationen eingegeben und ausgegeben sowie zu einer Zentrale übertragen werden können. Hierbei werden im Endgerät feste Abfragestrukturen verwendet.

Aufgabe der Erfindung ist es daher, ein Verfahren und eine Vorrichtung der gattungsgemäßen Art vorzuschlagen, durch die eine Anpassung der benötigten Software in der Datenendeinrichtung an neue oder geänderte Abfragefunktionalitäten ohne großen Aufwand möglich ist.

Gelöst wird diese Aufgabe für ein gattungsgemäßes Verfahren mit den kennzeichnenden Merkmalen des Patentanspruchs 1. Vorteilhafte Weiterbildungen des Verfahrens sind den Unteransprüchen 2 bis 14 entnehmbar. Im Anspruch 15, sind die Merkmale einer Einrichtung zur Durchführung des erfindungsgemäßen Verfahrens angegeben. Die Unteransprüche 16 bis 24 kennzeichnen vorteilhafte Ausgestaltungen dieser Einrichtung.

Die Erfindung geht von der Erkenntnis aus, daß Datenbankabfragen, insbesondere auch Abfragen im Rahmen von Informationsdieristleistungen über mobile Datenendeinrichtungen für verkehrstefematische Anwendungen, stets einem parametrierbaren.Ablaufschema (Abfragestruktur) folgen. Die Erfindung verzichtet auf die Speicherung von Abfragestrukturen, die in Form von vornherein explizit vorgegebener, fertiger Programmabläufe für jede Anwendung gestaltet sind, und sieht statt dessen zur Definition und Speicherung derartiger spezifischer Abfragestrukturen eine anwendungsunabhängige, d.h. allgemeine Abfragestruktur und jeweils einen anwendungsspezifischen Parametersatz vor. Diese allgemeine Abfragestruktur ist sowohl in der jeweiligen Datenendeinrichtung als auch in der zentralen Einheit langfristig unveränderlich gespeichert. Die jeweilige spezifische Abfragestruktur läßt sich in der Datenendeinrichtung durch Interpretierung der allgemeinen Abfragestruktur anhand des für die jeweilige Anwendung vorgesehenen spezifischen Parametersatzes ermitteln.

Im Hinblick auf die Übermittlung der Antworten der zentralen Einheit an die Datenendeinrichtung wird ebenfalls eine deutliche Vereinfachung gegenüber dem bisherigen Stand der Technik durch die Erfindung erreicht. Durch Untersuchungen wurde nämlich herausgefunden, daß bei praktisch allen in Frage kommenden Abfragefunktionalitäten sich die entsprechenden spezifischen Antwortstrukturen nach wenigen Grundmustern einteilen lassen. Anstatt nun für jede einzelne Abfragefunktionalität wie bisher eine individuelle Antwortstruktur in der Datenendeinrichtung und in der zentralen Einheit zu speichern, sieht die Erfindung vor, daß lediglich einige wenige anwendungsunabhängige Antwortformate in der Datenendeinrichtung und in der zentralen Einheit gespeichert werden und einer Antwort jeweils eines dieser Formate zugeordnet wird.

Das erfindungsgemäße Verfahren ist demnach dadurch gekennzeichnet, daß anfänglich sowohl in der zentralen Einheit als auch in der Datenendeinrichtung eine langfristig unveränderliche und anwendungsunabhängige Abfragestruktur (allgemeine Abfragestruktur) und eine kleine Anzahl langfristig unveränderlicher und anwendungsunabhängiger Antwortformate eingespeichert werden. Die für jede Anwendung benötigte spezifische Abfragestruktur wird jeweils anhand der allgemeinen Abfragestruktur definiert und in Form eines Parametersatzes in der zentralen Einheit gespeichert. Der Benutzer kann durch die Datenendeinrichtung bei Bedarf eine jeweils noch nicht in der Datenendeinrichtung gespeicherte spezifische Abfragestruktur über den Kommunikationskanal von der zentralen Einheit anfordern. Die Datenendeinrichtung bekommt die angeforderte Abfragestruktur in Form eines zur jeweiligen Anwendung gehörigen Parametersatzes übermittelt und speichert diesen. Zur Benutzung der Anwendung, d.h. zur Durchführung einer Abfragefunktionalität wird die spezifische Abfragestruktur in der Datenendeinrichtung durch Interpretation der allgemeinen Abfragestruktur anhand des entsprechenden Parametersatzes der jeweiligen Anwendung gebildet. Diese spezifische Abfragestruktur wird dann zumindest teilweise durch den Benutzer mit entsprechenden Werten ausgefüllt und als Abfrage an die zentrale Einheit übermittelt. Die auf diese Abfrage hin von der zentralen Einheit über den Kommunikationskanal an die Datenendeinrichtung übermittelten Antworten werden jeweils anhand eines der in der Datenendeinrichtung gespeicherten Antwortformate, das in der jeweiligen Antwort bezeichnet ist, für den Benutzer verfügbar gemacht, also beispielsweise optisch auf einem Display dargestellt. Die allgemeine Abfragestruktur enthält zweckmäßigerweise eine Kennzeichnung für die jeweilige Abfragefunktionalität, eine Liste von Abfrageparametern und eine Liste der Datentypen der Abfrageparameter. Die vorgegebenen vordefinierten Antwortformate, die in der Datenendeinrichtung und in der zentralen Einheit gespeichert sind, sollten mindestens einen einzelnen Datensatz und eine Selektionsliste von Datensätzen umfassen. Die Anzahl der vordefinierten Antwortformate beträgt mindestens 2 und kann nach oben problemlos auf 10, vorzugsweise maximal 5 beschränkt werden. Es empfiehlt sich vielfach, die spezifischen Abfragestrukturen im Sinne der Erfindung, d.h. den jeweiligen Parametersatz längerfristig in der Datentendeinrichtung zu speichern. Dies ist aber keineswegs notwendig. Es ist im Grundsatz auch möglich, bei jeder Abfrage sich zuvor den zugeordneten Parametersatz neu übermitteln zu lassen. Insofern kann dieselbe Verfahrensweise angewendet werden, wie sie die Erfindung in bevorzugter Ausgestaltung vorsieht, um Abfragefunktionalitäten nutzen zu können, die neu in die zentrale Einheit eingegeben wurden. Hierzu ist vorgesehen, daß die Datenendeinrichtung im Rahmen der allgemeinen Abfragestruktur mit einer festen grundlegenden Abfragemöglichkeit für die Anforderung der verfügbaren Abfragefunktionalitäten von der zentralen Einheit ausgestattet ist. Die auf eine solche generelle Abfrage hin in der Datenendeinrichtung anzeigbaren neuen Abfragefunktionalitäten werden vorzugsweise in Form einer Liste aller aktuell verfügbaren Abfragefunktionalitäten dargestellt. Durch Auswahl einer bestimmten Abfragefunktionalität kann bei Bedarf die jeweilige spezifische Abfragestruktur durch die Datenendeinrichtung angefordert werden.

Die Erfindung ermöglicht es problemlos, Änderungen in der Abfragestruktur bestehender Abfragefunktionalitäten zu berücksichtigen. Wenn eine Abfrage vorgenommen wird, die anhand einer in der Datenendeinrichtung gespeicherten, aber nicht mehr dem aktuellen Stand entsprechenden spezifischen Abfragestruktur erfolgte, so kann vorgesehen sein, daß von der zentralen Einheit automatisch die aktuelle Fassung der spezifischen Abfragestruktur in Form des zugehörigen Parametersatzes an die Datenendeinrichtung übermittelt und dort gespeichert wird. Auf diese Weise kann anschließend vom Benutzer problemlos eine aktualisierte Abfrage an die zentrale Einheit abgeschickt werden. Es empfiehlt sich, die spezifische Abfragestruktur für den Benutzer in der Datenendeinrichtung für die Eingabe zumindest eines Teils der Parameter einer Abfrage in Form einer Eingabemaske sichtbar zu machen. Für viele Anwendungen ist es zweckmäßig, zumindest einen Abfrageparameter automatisch durch die Datenendeinrichtung ausfüllen zu lassen. Hierfür kommen insbesondere die Daten zur Beschreibung der aktuellen geografischen Position des Benutzers bzw. der Datenendeinrichtung in Frage. Dies ist vor allem dann zweckmäßig, wenn es sich um eine mobile Datenendeinrichtung handelt, insbesondere eine in einem Fahrzeug genutzte Datenendeinrichtung. In diesem Fall wird der Datenaustausch zwischen der zentralen Einheit und der Datenendeinrichtung über eine drahtlose Kommunikationsverbindung abgewickelt. Diese Art des Kommunikationskanals kann selbstverständlich auch bei fest installierten Datenendeinrichtungen genutzt werden. Im Regelfall wird man dabei allerdings auf übliche Verbindungen über Datenleitungen zurückgreifen. Bei Benutzung einer drahtlosen Kommunikation empfiehlt es sich besonders, den Datenaustausch in codierter Form im Rahmen eines zellularen Mobilfunks abzuwickeln. Mit besonderem Vorteil wird die Erfindung genutzt für Anwendungen, bei denen in der zentralen Einheit Informationen über verkehrstechnisch und/oder touristisch interessante Punkte bereitgehalten und vom Benutzer über die Datenendeinrichtung die geografischen Koordinaten ausgewählter interessierender Punkte abgefragt werden.

Da die allgemeine Abfragestruktur und auch die vordefinierten anwendungsunabhängigen Antwortformate in der Datenendeinrichtung dauerhaft gespeichert sein müssen, empfiehlt sich hierzu die Verwendung entsprechender schreibgeschützter Speicher. Weiterhin empfiehlt es sich, die Datenendeinrichtung mit einer Eingabetastatur und einem Display zur optischen Datenausgabe auszurüsten. Selbstverständlich ist es grundsätzlich auch möglich, die Datenendeinrichtung mit einer Sprachausgabe für die Übermittlung der Antworten an den Benutzer auszustatten. Damit eine automatische Übermittlung der aktuellen Positionsdaten einer Datenendeinrichtung, insbesondere einer mobilen Datenendeinrichtung, an die zentrale Einheit erfolgen kann, muß die Datenendeinrichtung mit einer entsprechenden Einrichtung zur selbsttätigen Ermittlung der geografischen Position ausgestattet oder datentechnisch verbunden sein.

Die wesentlichen Vorteile der Erfindung sind insbesondere darin zu sehen, daß eine außerordentlich große Flexibilität im Hinblick auf die Änderung vorhandener oder die Einführung neuer Dienstleistungen gegeben ist, um diese Dienstleistungen für Besitzer von Datenendeinrichtungen verfügbar zu machen, die nicht von vornherein für die Benutzung dieser Dienstleistungen speziell eingerichtet sein müssen. Da lediglich einige grundlegende Strukturen in den Datenendeinrichtungen zu speichern sind, spielen herstellerspezifische Ausgestaltungen (z.B. die Auswahl des Mikroprozessors oder des Betriebssystems) der einzelnen Geräte für die Durchführung der Erfindung keine Rolle. Die Benutzer sind zur Aktualisierung des Software-Standes ihrer Datenendgeräte nicht gezwungen, eine Fachwerkstatt aufzusuchen. Hinzu kommt, daß der Kommunikationsaufwand für die Übermittlung der spezifischen Abfragestrukturen sehr gering ist. Im Regelfall ist für den jeweiligen Parametersatz eine Feldlänge von insgesamt nur bis zu 140 Bytes ausreichend.

Nachfolgend wird die Erfindung anhand der Darstellung in den Figuren 1 bis 3 näher erläutert. Es zeigen:
- Fig. 1: das herkömmliche Ablaufschema einer Informationsabfrage,
- Fig. 2: das Ablaufschema des erfindungsgemäßen Verfahrens und
- Fig. 3: den Aufbau eines Parametersatzes.

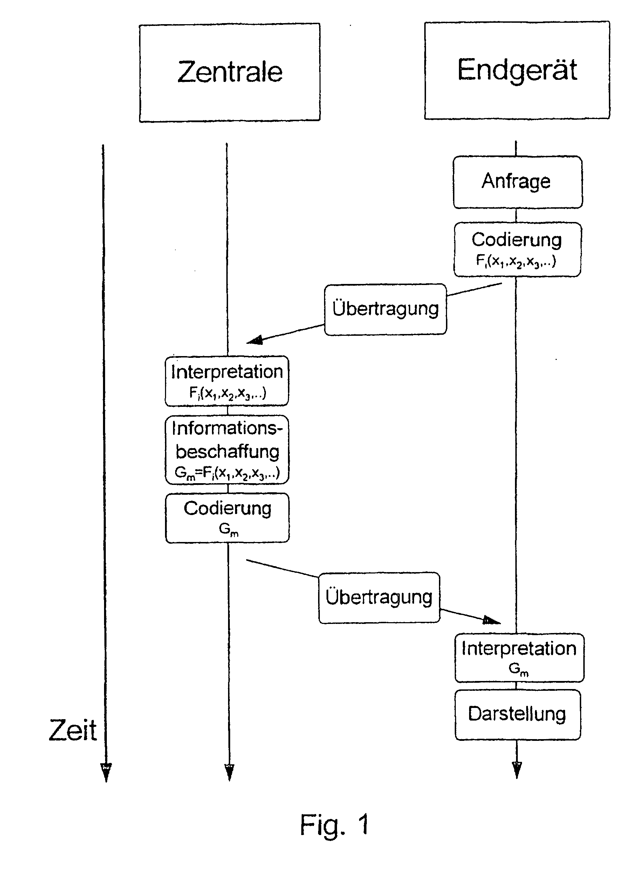

In Fig. 1 ist der zwischen einer zentralen Einheit (Zentrale) und einer Datenendeinrichtung (Endgerät) stattfindende herkömmliche Ablauf einer Informationsabfrage in allgemeiner und schematischer Form dargestellt. Vom jeweiligen Benutzer wird beispielsweise über eine Tastatur eine Anfrage eingegeben, die anschließend in codierter Form an die Zentrale übermittelt wird. Die Anfrage kann man allgemein als Funktional Fᵢ einer Reihe von Parametern x₁, x₂, x₃ ... auffassen. Diese übermittelte Anfrage wird in der Zentrale interpretiert und die gewünschte Information Gₘ = Fᵢ (x₁, x₂, x₃, ...) ermittelt. Die gewünschte Information wird dann codiert und in der codierten Form an die Datenendeinrichtung als Antwort übertragen. Dort erfolgt eine Interpretation der Antwort Gₘ, um sie anschließend für den Benutzer z.B. optisch darzustellen oder in sonstiger Form zu verarbeiten. Dieser Ablauf entspricht dem bisherigen Stand der Technik. Dabei muß sowohl datenendeinrichtungsseitig wie zentralseitig die Abfrage in Struktur und Datentyp bekannt und festgelegt sein, d.h. daß das Funktional F und die Parameter x₁, x₂, x₃, ... im einzelnen definiert und bekannt sein müssen. Der Abfrage liegt daher regelmäßig eine wohldefinierte Maske zugrunde, die sowohl datenendeinrichtungsseitig zur Eingabe der Parameter als auch zentralseitig zur Interpretation der übermittelten Parameter genutzt wird. Eine Modifikation oder Erweiterung der Abfrage erfordert eine Software-Änderung sowohl in der Zentrale als auch in der Datenendeinrichtung.

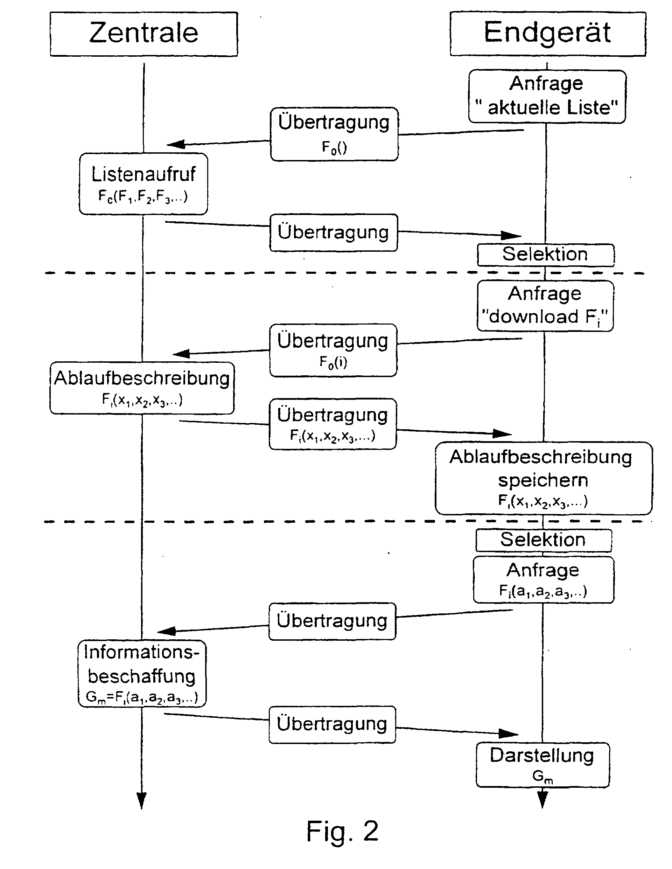

Demgegenüber sieht die vorliegende Erfindung einen anderen Ablauf vor, wie er in Fig. 2 in einem vereinfachten Ablaufschema dargestellt ist. Kennzeichnend ist hierbei die Möglichkeit, einer Datenendeinrichtung in Form einer digitalen Meldung von einer zentralen Einheit eine Ablaufbeschreibung zur Abfrage von Parametern bei der zentralen Einheit durch einen Benutzer, also eine Abfragestruktur, zu übermitteln. Das als Datenendeinrichtung durch den Benutzer zur Durchführung einer Abfragefunktionalität benutzte Endgerät verfügt hinsichtlich seiner Programmierung anfänglich über eine allgemeine Abfragestruktur und eine Möglichkeit, eine Auswahlliste der in der Zentrale verfügbaren Abfragefunktionalität (aktuelle Liste) anzufordern. Diese grundlegende Abfrage, die in Fig. 2 mit F₀ () bezeichnet ist, wird an die Zentrale übertragen und führt dort zum Aufruf einer entsprechenden Liste für die angebotenen Dienste, die mit F₀ (F₁, F₂, F₃ ...) bezeichnet ist. Diese Liste wird über den benutzten Kommunikationskanal an das Endgerät übertragen und dort sichtbar gemacht, so daß der Benutzer den von ihm gewünschten Dienst selektieren kann, um die zugehörige spezifische Abfragestruktur Fᵢ anzufordern. Die Anforderung wird wiederum über den Kommunikationskanal an die Zentrale übertragen und führt dort zur Bereitstellung und anschließenden Übertragung des Funktionals Fᵢ (x₁, x₂, x₃, ...) an das Endgerät. Das Funktional Fᵢ beinhaltet die anwenderspezifische Parameterliste, anhand deren ein Interpreter in dem Endgerät die in dem Endgerät gespeicherte allgemeine Struktur der anwendungsunabhängigen Ablaufbeschreibung (allgemeine Abfragestruktur) interpretiert, um die anwendungsspezifische Abfragestruktur zu erhalten. In zweckmäßiger Weise wird das anwendungsspezifische Funktional Fᵢ im Endgerät gespeichert, um für künftige Anwendungsfälle unmittelbar zur Verfügung zu stehen, so daß dann keine erneute Übertragung von der Zentrale aus erfolgen muß. Dies ist aber keineswegs zwingend.

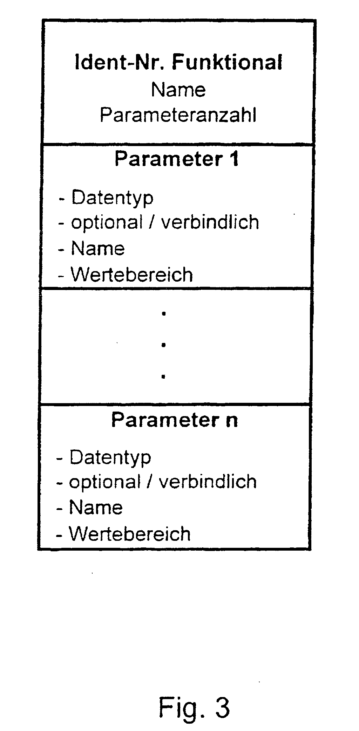

Eine Möglichkeit, wie das Funktional F, also die Parameterliste aufgebaut sein kann, ist in Fig. 3 schematisch dargestellt. Im Kopf dieser Liste ist zunächst eine Identnummer des Funktionals, sein Name und die Anzahl der zugehörigen Parameter angegeben. Danach wird zu jedem der Parameter 1 bis n jeweils der Datentyp, femer die Eigenschaft, ob der Parameter optionat oder verbindlich eingegeben werden muß, weiterhin der Name des Parameters und schließlich der Wertebereich des Parameters angegeben. Diese vergleichsweise wenigen und daher in einer kurzen digitalen Meldung übermittetbaren Angaben reichen aus, um anhand der gespeicherten allgemeinen Abfragestruktur die anwendungsspezifische Abfragestruktur eindeutig zu definieren.

Der Benutzer füllt nun entsprechend der von ihm gewünschten Abfrage die ihm z.B. in einem Display in Form einer Eingabemaske angezeigte Parameterliste soweit erforderlich mit konkreten Werten aus. Ein Teil der Parameterwerte kann auch durch das Endgerät selbst ausgefüllt werden. Wenn das Endgerät an eine entsprechende Ortungseinrichtung angeschlossen ist, kann insbesondere die aktuelle geografische Position des z.B. mobil eingesetzten Endgeräts ermittelt werden. Die konkretisierte Abfrage wird nun an die Zentrale über den Kommunikationskanal übertragen und führt dort zur Ermittlung der relevanten Informationen Gₘ = Fᵢ (a₁, a₂, a₃, ...). Diese Informationen werden anschließend an das Endgerät übertragen und dort für den Benutzer verfügbar gemacht, indem sie beispielsweise auf einem Display dargestellt werden. Da die Art der Darstellung je nach Art der angefragten Informationen, also je nach Abfragefunktionalität sehr unterschiedlich sein kann, muß das Endgerät über entsprechende Anweisungen verfügen, wie die Darstellung erfolgen soll. Dies wird erfindungsgemäß dadurch realisiert, daß einerseits im Endgerät eine kleine Anzahl von z.B. fünf zulässigen Antwortformaten fest gespeichert wird. In der Übertragung der Antwort Gₘ ist jeweils ein Parameter enthalten, der angibt, welches Antwortformat jeweils im Endgerät zugrunde zu legen ist.

Die aktuelle Liste F₀ der verfügbaren Abfragefunktionalitäten könnte beispielsweise wie folgt aussehen:

| | |
|---|---|
| Hotels | 123 |
| Restaurants | 124 |
| Telefonnummern | 125 |
| Museen | 126 |
| Veranstaltungen | 127 |
| Parkplätze | 128 |
| • | • |
| • | • |
| • | • |

Wenn sich ein Benutzer für die Anforderung der Abfragefunktionalität Hotels entschieden hat, wird ihm der zu dieser Anwendung gehörige Parametersatz übermittelt, so daß er anschließend seine spezielle Fragestellung formulieren kann. Die übermittelte Antwort also könnte dann beispielsweise in einer Auflistung der Hotelnamen sowie der zugehörigen Ortsangaben und Telefonnummern bestehen.

Es war völlig überraschend, daß bereits bei einer Beschränkung auf lediglich drei vordefinierte Antwortformate und sechs unterschiedliche Datentypen (z.B. Status, Zahl, Text, Datum/Zeit, Position, Richtung) eine Vielzahl unterschiedlicher Dienste im Sinne der Erfindung realisierbar sind, ohne daß unerwünschte Abstriche bei den Anforderungen an die Bedienbarkeit und den Informationsgehalt der im Rahmen der verschiedenen Dienste übermittelten Antworten hingenommen werden müssen.

## Patentansprüche

1. Verfahren zum Datenaustausch zwischen einer für die Verarbeitung, Speicherung und Bereitstellung von Daten vorgesehenen zentralen Einheit und einer Datenendeinrichtung über einen Kommunikationskanal, wobei von der Datenendeinrichtung an die zentrale Einheit anwendungsbezogene Abfragen (Abfragefunktionalitäten) mit einer der jeweiligen Anwendung entsprechenden spezifischen Abfragestruktur gerichtet werden und die spezifischen Abfragestrukturen in der zentralen Einheit gespeichert sind und wobei die Antworten der zentralen Einheit mit einer der jeweiligen Anwendung entsprechenden spezifischen Antwortstruktur an die Datenendeinrichtung übermittelt werden,
**dadurch gekennzeichnet,**
- **daß** anfänglich sowohl in die zentrale Einheit als auch in die Datenendeinrichtung eine langfristig unveränderliche, anwendungsunabhängige Abfragestruktur (allgemeine Abfragestruktur) und eine kleine Anzahl langfristig unveränderlicher, anwendungsunabhängiger Antwortformate eingespeichert werden,
- **daß** für jede Anwendung die spezifische Abfragestruktur jeweils anhand der allgemeinen Abfragestruktur definiert und in der zentralen Einheit in Form eines Parametersatzes gespeichert wird,
- **daß** die Datenendeinrichtung bei Bedarf eine jeweils noch nicht in ihr gespeicherte spezifische Abfragestruktur über den Kommunikationskanal von der zentralen Einheit anfordert und den zugehörigen Parametersatz übermittelt bekommt und speichert,
- **daß** zur Durchführung einer Abfragefunktionalität die zugehörige spezifische Abfragestruktur in der Datenendeinrichtung anhand des entsprechenden Parametersatzes aus der allgemeinen Abfragestruktur gebildet und nach zumindest teilweiser Ausfüllung durch den Benutzer mit Werten an die zentrale Einheit übermittelt wird und
- **daß** die Datenendeinrichtung die auf die gestellten Fragen hin von der zentralen Einheit übermittelten Antworten anhand eines der gespeicherten, in der jeweiligen Antwort bezeichneten Antwortformate für den Benutzer verfügbar macht.

2. Verfahren nach Anspruch 1,
**dadurch gekennzeichnet,**
**daß** die allgemeine Abfragestruktur eine Kennzeichnung für die jeweilige Abfragefunktionalität, eine Liste von Abfrageparametern und eine Liste der Datentypen der Abfrageparameter beinhaltet

3. Verfahren nach einem der Ansprüche 1 bis 2,
**dadurch gekennzeichnet,**
**daß** die vorgegebenen vordefinierten Antwortformate mindestens einen einzelnen Datensatz und eine Selektionsliste von Datensätzen umfassen.

4. Verfahren nach einem der Ansprüche 1 bis 3,
**dadurch gekennzeichnet,**
**daß** die Anzahl der vordefinierten Antwortformate mindestens 2 und maximal 10, insbesondere maximal 5 beträgt.

5. Verfahren nach einem der Ansprüche 1 bis 4,
**dadurch gekennzeichnet,**
**daß** bei Einführung einer neuen Abfragefunktionalität die dazugehörige spezifische Abfragestruktur in der zentralen Einheit hinterlegt wird, daß die neue Abfragefunktionalität in der Datenendeinrichtung anzeigbar ist, insbesondere anzeigbar ist innerhalb einer Liste aller aktuell verfügbaren Abfragefunktionalitäten, und daß die spezifische Abfragestruktur der neuen Abfragefunktionalität bei Bedarf durch die Datenendeinrichtung angefordert wird.

6. Verfahren nach einem der Ansprüche 1 bis 5,
**dadurch gekennzeichnet,**
**daß** die spezifischen Abfragestrukturen in der Datenendeinrichtung längerfristig gespeichert werden.

7. Verfahren nach einem der Ansprüche 1 bis 6,
**dadurch gekennzeichnet,**
**daß** bei einer Abfrage, die anhand einer in der Datenendeinrichtung gespeicherten, aber nicht mehr dem aktuellen Stand entsprechenden spezifischen Abfragestruktur vorgenommen wurde, von der zentralen Einheit die aktuelle spezifische Abfragestruktur an die Datenendeinrichtung übermittelt und dort gespeichert wird.

8. Verfahren nach einem der Ansprüche 1 bis 7,
**dadurch gekennzeichnet,**
**daß** die spezifische Abfragestruktur für den Benutzer in der Datenendeinrichtung in Form einer Eingabemaske für die Eingabe zumindest eines Teils der Parameter einer Abfrage sichtbar gemacht wird.

9. Verfahren nach einem der Ansprüche 1 bis 8,
**dadurch gekennzeichnet,**
**daß** die Datenendeinrichtung zumindest einen Abfrageparameter automatisch mit einem Wert ausfüllt.

10. Verfahren nach Anspruch 9,
**dadurch gekennzeichnet,**
**daß** bei einer mobilen Datenendeinrichtung zumindest ein automatisch ausgefüllter Parameter die aktuelle geografische Position der Datenendeinrichtung beschreibt.

11. Verfahren nach Anspruch 10,
**dadurch gekennzeichnet,**
**daß** die mobile Datenendeinrichtung in einem Fahrzeug genutzt wird.

12. Verfahren nach einem der Ansprüche 1 bis 11,
**dadurch gekennzeichnet,**
**daß** der Datenaustausch durch drahtlose Kommunikation erfolgt.

13. Verfahren nach Anspruch 12,
**dadurch gekennzeichnet,**
**daß** der Datenaustausch in codierter Form durch zellularen Mobilfunk erfolgt.

14. Verfahren nach einem der Ansprüche 1 bis 13,
**dadurch gekennzeichnet,**
**daß** in der zentralen Einheit Informationen über verkehrstechnisch und/oder touristisch interessante Punkte bereitgehalten und vom Benutzer über die Datenendeinrichtung von der zentralen Einheit die geografischen Koordinaten ausgewählter interessierender Punkte abgefragt werden.

15. Einrichtung zur Durchführung des Verfahrens nach Anspruch 1, mit einer zentralen Einheit für die Verarbeitung, Speicherung und Bereitstellung von Daten und mit mindestens einer Datenendeinrichtung sowie mit einem Kommunikationskanai zum Austausch von Daten zwischen der zentralen Einheit und der Datenendeinrichtung im Rahmen unterschiedlicher Anwendungen, wobei die Datenendeinrichtung mit Einrichtungen zur Datenein- und -ausgabe für den Benutzer versehen ist,
**dadurch gekennzeichnet,**
- **daß** sowohl in der Datenendeinrichtung als auch in der zentralen Einheit zur Durchführung von Datenabfragen bei der zentralen Einheit für bestimmte Anwendungen (Abfragefunktionalitäten) durch den Benutzer eine langfristig unveränderliche, anwendungsunabhängige Abfragestruktur (allgemeine Abfragestruktur) und eine kleine Anzahl langfristig unveränderlicher, anwendungsunabhängiger Antwortformate gespeichert sind,
- **daß** für jede Anwendung die spezifische Abfragestruktur jeweils anhand der allgemeinen Abfragestruktur als Parametersatz in der zentralen Einheit definiert und gespeichert ist,
- **daß** bei Bedarf eine jeweils noch nicht in der Datenendeinrichtung verfügbare spezifische Abfragestruktur von der Datenendeinrichtung über den Kommunikationskanal anforderbar und als entsprechender Parametersatz aus der zentralen Einheit über den Kommunikationskanal übermittelbar und in der Datenendeinrichtung speicherbar ist,
- **daß** die spezifische Abfragestruktur durch einen Interpreter in der Datenendeinrichtung anhand der gespeicherten allgemeinen Abfragestruktur und des jeweiligen Parametersatzes erstellbar und nach zumindest teilweiser Ausfüllung durch den Benutzer mit Werten über den Kommunikationskanal an die zentrale Einheit übermittelbar ist und
- **daß** die von der zentralen Einheit auf die gestellten Anfragen übermittelten Antworten durch die Datenendeinrichtung anhand eines der gespeicherten, in der jeweiligen Antwort bezeichneten Antwortformate für den Benutzer darstellbar sind.

16. Einrichtung nach Anspruch 15,
**dadurch gekennzeichnet,**
**daß** die allgemeine Abfragestruktur eine Kennzeichnung für die jeweilige Abfragefunktionalität, eine Liste von Abfrageparametern und eine Liste der Datentypen der Abfrageparameter beinhaltet.

17. Einrichtung nach einem der Ansprüche 15 bis 16,
**dadurch gekennzeichnet,**
**daß** die gespeicherten vordefinierten Antwortformate mindestens einen einzelnen Datensatz und eine Selektionsliste von Datensätzen umfassen.

18. Einrichtung nach einem der Ansprüche 15 bis 17,
**dadurch gekennzeichnet,**
**daß** die in der zentralen Einheit aktuell verfügbaren Abfragefunktionalitäten von der Datenendeinrichtung abfragbar und in dieser in Form einer Liste anzeigbar sind zur Auswahl einer gewünschten Abfragefunktionalität.

19. Einrichtung nach einem der Ansprüche 15 bis 17,
**dadurch gekennzeichnet,**
**daß** die allgemeine Abfragestruktur und die vordefinierten Antwortformate in der Datenendeinrichtung in einem schreibgeschützten Speicher gespeichert sind.

20. Einrichtung nach einem der Ansprüche 15 bis 19,
**dadurch gekennzeichnet,**
**daß** die Datenendeinrichtung mit einer Eingabetastatur und einem Display zur optischen Datenausgabe ausgerüstet ist.

21. Einrichtung nach Anspruch 20,
**dadurch gekennzeichnet,**
**daß** die Datenendeinrichtung mit einer Einrichtung zur sprachlichen Datenausgabe eingerichtet ist.

22. Einrichtung nach einem der Ansprüche 15 bis 21,
**dadurch gekennzeichnet,**
**daß** die Datenendeinrichtung ein mobiles Gerät, insbesondere ein in einem Kraftfahrzeug mitgeführtes Gerät ist.

23. Einrichtung nach Anspruch 22,
**dadurch gekennzeichnet,**
**daß** die Datenendeinrichtung an eine Einrichtung zur selbsttätigen Ermittlung der geografischen Position der Datenendeinrichtung angeschlossen ist und bei Anfragen an die zentrale Einheit die aktuellen Positionsdaten der Datenendeinrichtung automatisch an die zentrale Einheit übermittelbar sind.

24. Einrichtung nach einem der Ansprüche 15 bis 23,
**dadurch gekennzeichnet,**
**daß** der Kommunikationskanal als drahtlose Kommunikationsverbindung, insbesondere als zellulares Mobilfunknetz ausgebildet ist.

## Claims

1. Method for exchanging data between a central unit intended for the processing, storage and preparation of data, and data terminal equipment via a communications channel, in which application-related enquiries (enquiry functionalities) are directed from the data terminal equipment to the central unit with a specific enquiry structure which corresponds to the application concerned, and the specific enquiry structures are stored in the central unit, and in which the replies from the central unit are transmitted with one of the specific reply structures corresponding to the application concerned to the data terminal equipment,
**characterised in that**
- initially, an enquiry structure which does not change on a long-term basis (general enquiry structure) and a small number of application-independent reply formats which do not change on a long-term basis are stored both in the central unit and in the data terminal equipment,
- **in that**, for each application, the specific enquiry structure is defined in each case on the basis of the general enquiry structure and is saved in the central unit in the form of a parameter block,
- **in that** the data terminal equipment requests from the central unit via the communication channel, when required, a specific enquiry structure which is not yet stored in it, and receives and saves the appropriate parameter block,
- **in that**, in order to implement an enquiry functionality, the relevant specific enquiry structure is formed in the data terminal equipment from the general enquiry structure on the basis of the corresponding parameter block, and is transmitted to the central unit after being at least partially completed with figures by the user, and
- **in that** the data terminal equipment makes available to the user the replies sent by the central unit in response to the questions asked, on the basis of one of the saved reply formats designated in the reply concerned.

2. Method as in Claim 1,
**characterised in that**
the general enquiry structure contains an identification of the enquiry functionality concerned, a list of enquiry parameters, and a list of the data types of the enquiry parameters.

3. Method as in one of Claims 1 to 2,
**characterised in that**
the predetermined, predefined reply formats include at least one individual data record and a selection list of data records.

4. Method as in one of Claims 1 to 3,
**characterised in that**
the number of predefined reply formats is at least 2 and at most 10, in particular at most 5.

5. Method as in one of Claims 1 to 4,
**characterised in that**
when a new enquiry functionality is introduced, the relevant specific enquiry structure is placed in the central unit, **in that** the new enquiry functionality can be displayed at the data terminal equipment, in particular can be displayed as part of a list of all currently available enquiry functionalities, and **in that** the specific enquiry structure of the new enquiry functionality is requested by the data terminal equipment when required.

6. Method as in one of Claims 1 to 5,
**characterised in that**
the specific enquiry structures are stored on a fairly long-term basis in the data terminal equipment.

7. Method as in one of Claims 1 to 6,
**characterised in that**,
in the case of an enquiry which is made on the basis of a specific enquiry structure which is stored in the data terminal equipment but which no longer corresponds to the current status, the current specific enquiry structure is transmitted from the central unit to the data terminal equipment and is saved there.

8. Method as in one of Claims 1 to 7,
**characterised in that**
the specific enquiry structure is made visible to the user, in the data terminal equipment, in the form of an input mask for entering at least part of the parameters of an enquiry.

9. Method as in one of Claims 1 to 8,
**characterised in that**
the data terminal equipment automatically completes, by inserting a value, at least one enquiry parameter.

10. Method as in Claim 9,
**characterised in that**,
in the case of mobile data terminal equipment, at least one automatically completed parameter describes the current geographical location of the data terminal equipment.

11. Method as in Claim 10,
**characterised in that**
the mobile data terminal equipment is used in a vehicle.

12. Method as in one of Claims 1 to 11,
**characterised in that**
the data exchange is effected by means of wireless communication.

13. Method as in Claim 12,
**characterised in that**
the data exchange is effected in enciphered form by cellular mobile radio.

14. Method as in one of Claims 1 to 13,
**characterised in that**
information relating to points of interest in terms of traffic use or tourism is held in readiness at the central unit, and the geographical coordinates of selected points of interest are requested by the user from the central unit via the data terminal equipment.

15. Equipment for implementing the method as in Claim 1, having a central unit for processing, storing and preparing data, and having at least one data terminal equipment device and having a communications channel for the exchange of data between the central unit and the data terminal equipment as part of various applications, whereby the data terminal equipment is fitted with equipment for data entry and output for the user,
**characterised in that**
- an enquiry structure which does not change on a long-term basis (general enquiry structure) and a small number of application-independent reply formats which do not change on a long-term basis are stored both in the data terminal equipment and at the central unit for the purpose of the making, by the user, of data enquiries at the central unit for specific applications (enquiry functionalities),
- **in that**, for each application, the specific enquiry structure is in each case defined and saved in the central unit on the basis of the general enquiry structure in the form of a parameter block,
- **in that**, when required, a specific enquiry structure which is not yet available in the data terminal equipment can be requested by the data terminal equipment via the communications channel, and can be sent by the central unit in the form of a corresponding parameter block via the communications channel and saved in the data terminal equipment,
- **in that** the specific enquiry structure can be produced by an interpreter in the data terminal equipment on the basis of the stored general enquiry structure and the appropriate parameter block, and can be sent, after being at least partially completed by the insertion of values by the user, via the communications channel to the central unit, and
- **in that** the replies sent by the central unit in response to the enquiries can be displayed for the user by the data terminal equipment on the basis of one of the stored reply formats designated in the reply concerned.

16. Equipment as in Claim 15,
**characterised in that**
the general enquiry structure contains an identification of the enquiry functionality concerned, a list of enquiry parameters, and a list of the data types of the enquiry parameters.

17. Equipment as in one of Claims 15 to 16,
**characterised in that**
the saved, predefined reply formats include at least one individual data record and a selection list of data records.

18. Equipment as in one of Claims 15 to 17,
**characterised in that**
the enquiry functionalities currently available in the central unit can be requested by the data terminal equipment, and can be displayed therein in the form of a list for the purpose of selecting the enquiry functionality that is wanted.

19. Equipment as in one of Claims 15 to 17,
**characterised in that**
the general enquiry structure and the predefined reply formats are saved in the data terminal equipment in a write-protected memory facility.

20. Equipment as in one of Claims 15 to 19,
**characterised in that**
the data terminal equipment is equipped with an input keypad and a display for the optical output of data.

21. Equipment as in Claim 20,
**characterised in that**
the data terminal equipment is equipped with a device for data output by voice.

22. Equipment as in one of Claims 15 to 21,
**characterised in that**
the data terminal equipment is a mobile device, in particular a device which is carried in a vehicle.

23. Equipment as in Claim 22,
**characterised in that**
the data terminal equipment is linked to a device that automatically establishes the geographical location of the data terminal equipment and, when enquiries are sent to the central unit, the current location data of the data terminal equipment can be automatically transmitted to the central unit.

24. Equipment as in one of Claims 15 to 23,
**characterised in that**
the communications channel is in the form of a wireless communications link, in particular a cellular mobile radio network.

## Revendications

1. Procédé pour l'échange de données entre une unité centrale prévue pour le traitement, la mémorisation et la fourniture de données et un terminal de données par l'intermédiaire d'un canal de communication, le terminal de données adressant à l'unité centrale des interrogations spécifiques à l'application (fonctionnalités d'interrogation) avec une structure d'interrogation spécifique correspondant à l'application considérée, les structures d'interrogation spécifiques étant mémorisées dans l'unité centrale et les réponses de l'unité centrale étant transmises au terminal de données avec une structure de réponse spécifique correspondant à l'application considérée,
**caractérisé par le fait que**
- au début, on mémorise aussi bien dans l'unité centrale que dans le terminal de données une structure d'interrogation invariable à long terme et indépendante de l'application (structure d'interrogation générale) et un petit nombre de formats de réponse invariables à long terme et indépendants de l'application,
- pour chaque application, on définit la structure d'interrogation spécifique à chaque fois à l'aide de la structure d'interrogation générale et on la mémorise dans l'unité centrale sous la forme d'un ensemble de paramètres,
- le terminal de données demande si nécessaire à l'unité centrale, via le canal de communication, une structure d'interrogation spécifique qu'il n'a pas encore mémorisée et il reçoit et mémorise l'ensemble de paramètres associé transmis,
- pour la mise en oeuvre d'une fonctionnalité d'interrogation, on forme la structure d'interrogation spécifique associée dans le terminal de données à l'aide de l'ensemble de paramètres correspondant à partir de la structure d'interrogation générale et on la transmet à l'unité centrale après un remplissage au moins partiel avec des valeurs données par l'utilisateur et
- le terminal de données met à la disposition de l'utilisateur les réponses, transmises par l'unité centrale pour les questions posées, à l'aide de l'un des formats de réponse mémorisés et désignés dans la réponse respective.

2. Procédé selon la revendication 1,
**caractérisé par le fait que** la structure d'interrogation générale contient une désignation pour la fonctionnalité d'interrogation respective, une liste de paramètres d'interrogation et une liste des types de données des paramètres d'interrogation.

3. Procédé selon l'une des revendications 1 ou 2,
**caractérisé par le fait que** les formats de réponse prédéfinis prescrits comprennent au moins un ensemble individuel de données et une liste de sélection d'ensembles de données.

4. Procédé selon l'une des revendications 1 à 3,
**caractérisé par le fait que** le nombre des formats de réponse prédéfinis vaut au minimum 2 et au maximum 10, notamment au maximum 5.

5. Procédé selon l'une des revendications 1 à 4,
**caractérisé par le fait que**, lors de l'introduction d'une nouvelle fonctionnalité d'interrogation, la structure d'interrogation spécifique associée est enregistrée dans l'unité centrale, la nouvelle fonctionnalité d'interrogation peut être indiquée dans le terminal de données, notamment à l'intérieur d'une liste de toutes les fonctionnalités d'interrogation actuellement disponibles, et la structure d'interrogation spécifique de la nouvelle fonctionnalité d'interrogation est demandée si nécessaire par le terminal de données.

6. Procédé selon l'une des revendications 1 à 5,
**caractérisé par le fait que** les structures d'interrogation spécifiques sont mémorisées à long terme dans le terminal de données.

7. Procédé selon l'une des revendications 1 à 6,
**caractérisé par le fait que**, lors d'une interrogation qui a été effectuée à l'aide d'une structure d'interrogation spécifique, mémorisée dans le terminal de données mais ne correspondant plus à l'état actuel, la structure d'interrogation spécifique actuelle est transmise par l'unité centrale au terminal de données et y est mémorisée.

8. Procédé selon l'une des revendications 1 à 7,
**caractérisé par le fait que** la structure d'interrogation spécifique est rendue visible pour l'utilisateur dans le terminal de données sous la forme d'un masque d'entrée pour l'entrée au moins d'une partie des paramètres d'une interrogation.

9. Procédé selon l'une des revendications 1 à 8,
**caractérisé par le fait que** le terminal de données remplit au moins un paramètre d'interrogation automatiquement avec une valeur.

10. Procédé selon la revendication 9,
**caractérisé par le fait que**, dans le cas d'un terminal de données mobile, au moins un paramètre rempli automatiquement décrit la position géographique actuelle du terminal de données.

11. Procédé selon la revendication 10,
**caractérisé par le fait que** le terminal de données mobile est utilisé dans un véhicule.

12. Procédé selon l'une des revendications 1 à 11,
**caractérisé par le fait que** l'échange de données s'effectue par le biais d'une communication sans fil.

13. Procédé selon la revendication 12,
**caractérisé par le fait que** l'échange de données s'effectue sous forme codée par le biais d'une radiocommunication mobile cellulaire.

14. Procédé selon l'une des revendications 1 à 13,
**caractérisé par le fait que**, dans l'unité centrale, des informations concernant des points intéressants pour le trafic et/ou pour le tourisme sont maintenues à disposition et que les coordonnées géographiques de points intéressants sélectionnés sont demandées par l'utilisateur à l'unité centrale via le terminal de données.

15. Dispositif pour la mise en oeuvre du procédé selon la revendication 1, comportant une unité centrale pour le traitement, la mémorisation et la fourniture de données et au moins un terminal de données ainsi qu'un canal de communication pour l'échange de données entre l'unité centrale et le terminal de données dans le cadre de différentes applications, le terminal de données étant muni de dispositifs pour l'entrée et la sortie de données pour l'utilisateur,
**caractérisé par le fait que**
- aussi bien dans l'unité centrale que dans le terminal de données, une structure d'interrogation invariable à long terme et indépendante de l'application (structure d'interrogation générale) et un petit nombre de formats de réponse invariables à long terme et indépendants de l'application sont mémorisés pour la mise en oeuvre d'interrogations de données au niveau de l'unité centrale pour des applications déterminées(fonctionnalités d'interrogation),
- pour chaque application, la structure d'interrogation spécifique est définie à chaque fois à l'aide de la structure d'interrogation générale comme ensemble de paramètres dans l'unité centrale et elle est mémorisée,
- si nécessaire, une structure d'interrogation spécifique qui n'est pas encore disponible dans le terminal de données peut être demandée par le terminal de données via le canal de communication et peut être transmise comme ensemble de paramètres correspondant à partir de l'unité centrale via le canal de communication et peut être mémorisée dans le terminal de données,
- la structure d'interrogation spécifique peut être élaborée par un interpréteur dans le terminal de données à l'aide de la structure d'interrogation générale mémorisée et de l'ensemble de paramètres respectif et peut être transmise à l'unité centrale via le canal de communication après un remplissage au moins partiel avec des valeurs données par l'utilisateur et
- les réponses transmises par l'unité centrale pour les interrogations posées peuvent être présentées à l'utilisateur par le terminal de données à l'aide de l'un des formats de réponse mémorisés et désignés dans la réponse respective.

16. Dispositif selon la revendication 15,
**caractérisé par le fait que** la structure d'interrogation générale contient une désignation pour la fonctionnalité d'interrogation respective, une liste de paramètres d'interrogation et une liste des types de données des paramètres d'interrogation.

17. Dispositif selon l'une des revendications 15 ou 16,
**caractérisé par le fait que** les formats de réponse prédéfinis prescrits comprennent au moins un ensemble individuel de données et une liste de sélection d'ensembles de données.

18. Dispositif selon l'une des revendications 15 à 17,
**caractérisé par le fait que** les fonctionnalités d'interrogation actuellement disponibles dans l'unité centrale peuvent être demandées par le terminal de données et peuvent être indiquées dans celui-ci sous la forme d'une liste en vue de la sélection d'une fonctionnalité d'interrogation souhaitée.

19. Dispositif selon l'une des revendications 15 à 17,
**caractérisé par le fait que** la structure d'interrogation générale et les formats de réponse prédéfinis sont mémorisés dans le terminal de données dans une mémoire protégée contre l'écriture.

20. Dispositif selon l'une des revendications 15 à 19,
**caractérisé par le fait que** le terminal de données est équipé d'un clavier d'entrée et d'un écran pour la sortie optique de données.

21. Dispositif selon la revendication 20,
**caractérisé par le fait que** le terminal de données est construit avec un dispositif pour la sortie vocale de données.

22. Dispositif selon l'une des revendications 15 à 21, **caractérisé par le fait que** le terminal de données est un appareil mobile, en particulier un appareil embarqué dans un véhicule automobile.

23. Dispositif selon la revendication 22,
**caractérisé par le fait que** le terminal de données est raccordé à un dispositif pour la détermination automatique de la position géographique du terminal de données et que, en cas d'interrogations adressées à l'unité centrale, les données de position actuelles du terminal de données peuvent être transmises automatiquement à l'unité centrale.

24. Dispositif selon l'une des revendications 15 à 23, **caractérisé par le fait que** le canal de communication est conçu comme une liaison de communication sans fil, notamment comme un réseau de radiocommunication mobile cellulaire.
